(19) Europäisches Patentamt
European Patent Office
Office européen des brevets

(11) **EP 3 868 531 A1**

(12) **EUROPÄISCHE PATENTANMELDUNG**

(43) Veröffentlichungstag:
**25.08.2021 Patentblatt 2021/34**

(51) Int Cl.:
**B29B 7/18** *(2006.01)* **B29B 7/24** *(2006.01)*
**B29B 7/74** *(2006.01)* B29B 7/42 *(2006.01)*
B29B 7/46 *(2006.01)* B29B 7/82 *(2006.01)*

(21) Anmeldenummer: 20210536.7

(22) Anmeldetag: **30.11.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **19.02.2020 DE 102020202090**

(71) Anmelder: **Continental Reifen Deutschland GmbH 30165 Hannover (DE)**

(72) Erfinder:
• **Lopes, Ricardo Gaspar André**
  **30419 Hannover (DE)**
• **Wortmann, Christopher**
  **30419 Hannover (DE)**
• **Rennmann, Tim**
  **30419 Hannover (DE)**
• **Rath, Susanne**
  **30419 Hannover (DE)**

(74) Vertreter: **Continental Corporation c/o Continental AG Intellectual Property Postfach 169 30001 Hannover (DE)**

(54) **VORRICHTUNG ZUM HERSTELLEN VON SILIKAHALTIGEN KAUTSCHUKMISCHUNGEN, VERFAHREN ZUR HERSTELLUNG EINER KAUTSCHUKMISCHUNG UND ENTSPRECHENDE VERWENDUNGEN DER VORRICHTUNG**

(57) Vorrichtung zum Herstellen von silikahaltigen Kautschukmischungen (27), umfassend eine obere erste Mischrotoren (7) umfassende Mischkammer (3), welche von einem Oberkammergehäuse (6), einer ersten Einfüllöffnung (5) und einer ersten Auswurföffnung (4) begrenzt wird, eine untere zweite Mischrotoren (16) umfassende Mischkammer (12), welche von einem Unterkammergehäuse (15), einer zweiten Einfüllöffnung (14) und einer zweiten Auswurföffnung (13) begrenzt wird, wobei die Vorrichtung (1) räumlich zwischen der oberen Mischkammer (3) und der unteren Mischkammer (12) eine Kneteinheit (8) zum Kneten einer in der oberen Mischkammer (3) angemischten Kautschukmischung (27) aufweist und die Kneteinheit (8) mindestens zwei Knetrotoren (31, 32) aufweist. Des weiteren werden auch ein Verfahren zur Herstellung einer Kautschukmischung und entsprechende Verwendungen der Vorrichtung offenbart.

Fig. 1

## Beschreibung

Die Erfindung betrifft eine Vorrichtung zum Herstellen von silikahaltigen Kautschukmischungen, umfassend eine obere erste Mischrotoren umfassende Mischkammer, welche von einem Oberkammergehäuse, einer ersten Einfüllöffnung und einer ersten Auswurföffnung begrenzt wird, eine untere zweite Mischrotoren umfassende Mischkammer, welche von einem Unterkammergehäuse, einer zweiten Einfüllöffnung und einer zweiten Auswurföffnung begrenzt wird.

Die Erfindung betrifft auch ein Verfahren zur Herstellung einer Kautschukmischung und entsprechende Verwendungen der Vorrichtung.

In der Kautschukindustrie müssen verschiedenste Kautschukmischungen in großen Maßstäben mit möglichst genauen und homogen verteilten Zusammensetzungen hergestellt werden. Das Vermischen der einzelnen Kautschukmischungsbestandteile miteinander umfasst dabei stets den Zielkonflikt zwischen einem möglichst schnellen Herstellung der Kautschukmischung und dem Erreichen einer möglichst hohen Qualität derselben. Insbesondere bei letzterem spielen verschiedenen Parametern während der Herstellung eine Rolle und haben einen großen Einfluss auf das finale Produkt, welches beispielsweise ein Fahrzeugluftreifen sein kann. Einer der wichtigsten Parameter ist hierbei die Zusammensetzung der entstehenden Kautschukmischung.

Aufgrund dieser unterschiedlichen Anforderungen sind verschiedene Vorrichtungen zur Herstellung Kautschukmischungen wie Innenmischer und Tandemmischer bekannt, welche beispielsweise in den nachstehenden Dokumenten näher beschrieben sind.

EP 2736690 B1 offenbart "Verfahren zur Herstellung einer Ausgangsmischung, während dessen nacheinander die folgenden Schritte ausgeführt werden: A - in eine Mischeinrichtung von der Art Innenmischer (100) von der Art, die einen Mischbehälter (116) enthält, in den Rotoren (112, 113) montiert sind, die in Drehung versetzt werden und radiale Vorsprünge aufweisen, die zwischen sich und mit dem Behälter einen Luftspalt (e) bilden, werden eine Kautschukmatrix, Verstärkungsfüllstoffe und ggf. andere Bestandteile eingeführt, mit Ausnahme des Vernetzungssystems, B - das Mischen der Bestandteile im Behälter wird ausgeführt, bis eine homogene Mischung erhalten wird, indem sichergestellt wird, dass die Temperatur der Mischung niedriger als oder gleich 170°C bleibt [...]" (siehe Anspruch 1).

Die EP 0618055 B1 beschreibt ein Verfahren zum Verarbeiten von nicht reaktive Zusatzstoffe enthaltenden Kautschukgrundmischungen zu Kautschukfertigmischungen unter Verwendung eines Stempelkneters, wobei dem Stempelkneter eine vorher hergestellte, fertige Grundmischung zum Plastizieren zugeführt wird und nach dem Plastizieren die Charge unmittelbar einem stempellosen Kneter zugeführt wird, um die Fertigmischung durch Zugabe von reaktiven Zusatzstoffen bei verringerter Temperatur im Vergleich zum Stempelkneter fertig zu mischen.

DE4309451A1 betrifft ein Verfahren zur Herstellung von Kautschukmischungen, bei dem in einer ersten Stufe in einem Stempelkneter aus Kautschuk und nicht reaktiven Zusatzstoffen chargenweise eine Grundmischung hergestellt und die Grundmischung ohne Zwischenlagerung in einer zweiten Stufe unter Zufügen von reaktiven Zusatzstoffen in einem stempellosen Kneter ebenfalls chargenweise bei verringerter Temperatur fertig gemischt wird.

Eine Aufgabe, die der Erfindung zugrunde liegt, besteht darin, ein Verfahren zur Herstellung einer Kautschukmischung und eine Vorrichtung zum Mischen einer Kautschukmischung bereitzustellen, welche eine schnellere Herstellung einer Kautschukmischung ermöglicht und/oder die Qualität der Kautschukmischung nicht verändert oder bevorzugt sogar verbessert.

Gelöst wird diese Aufgabe erfindungsgemäß durch eine Vorrichtung zum Herstellen von silikahaltigen Kautschukmischungen, umfassend

- eine obere erste Mischrotoren umfassende Mischkammer, welche von einem Oberkammergehäuse, einer ersten Einfüllöffnung und einer ersten Auswurföffnung begrenzt wird,
- eine untere zweite Mischrotoren umfassende Mischkammer, welche von einem Unterkammergehäuse, einer zweiten Einfüllöffnung und einer zweiten Auswurföffnung begrenzt wird,

dadurch gekennzeichnet, dass die Vorrichtung
räumlich zwischen der oberen Mischkammer und der unteren Mischkammer eine Kneteinheit zum Kneten einer in der oberen Mischkammer angemischten Kautschukmischung aufweist und die Kneteinheit mindestens zwei Knetrotoren aufweist.

Überraschenderweise wurde festgestellt, dass bei der Herstellung einer Kautschukgrundmischung, insbesondere bei der Herstellung einer silikahaltigen Kautschukgrundmischung, die Auslastung eines Tandemmischers dadurch erhöht werden kann, dass zwischen der oberen und der unteren Mischkammer zusätzlich eine Kneteinheit installiert wird. Im Rahmen der vorliegenden Erfindung wurde herausgefunden, dass durch eine geeignete Abkühlung der in der oberen Mischkammer hergestellten Kautschukvormischung in der besagten Kneteinheit die obere Mischkammer bereits zur Herstellung einer weiteren Kautschukmischung verwendet werden kann. Dies hat nicht nur den Vorteil, dass noch mehr Kautschukmischungen pro Zeitintervall in der oberen Mischkammer hergestellt werden können, sondern zudem auch dass die Temperatur in der oberen Mischkammer konstant hochgehalten werden kann und somit die Mischphase zur Herstellung der Kautschukvormischung in der oberen Mischkammer selbst verkürzt wird. Dies führt zu einer 20 % höheren Auslastung gegenüber eines herkömmlichen Tandemmischers, welcher keine Kneteinheit wie eine erfindungsgemäße Vorrichtung umfasst.

Überraschenderweise hat die höhere Temperatur in der oberen Mischkammer zudem den Vorteil, dass die Kautschukvormischung und somit auch die entstehende Kautschukgrundmischung oder die entstehende Kautschukfertigmischung eine homogenere Verteilung der Mischungsbestandteile und eine höhere Dispersion der Füllstoffe, insbesondere von Silica, aufweist. Dies ist durch elektronenmikroskopische Aufnahmen (zum Beispiel mittels Scanning or Tunneling Electron Microsopy) von Querschnitten entstehender Mischungen ersichtlich.

Zusätzlich ermöglicht das separate Kneten einer silikahaltigen Kautschukmischung in einer besagten Kneteinheit einer erfindungsgemäßen Vorrichtung eine vollständigeren Ablauf der Silanisierungsreaktion in der besagten Kautschukmischung. Dies wiederum führt zu verbesserten Eigenschaften in dem finalen Reifenbauteil aus der besagten Kautschukmischung wie beispielsweise Rückprallelastizität bei Raumtemperatur und 70°C gemäß DIN 53 512 oder des maximalen (max) Verlustfaktor tan $\delta$ (tangens delta) aus dynamisch-mechanischer Messung bei 55 °C gemäß DIN 53 513 und einem Dehnungsdurchlauf (engl. "strain sweep"). Ohne an eine wissenschaftliche Theorie gebunden sein zu wollen, wird davon ausgegangen, dass die Kneteinheit einer erfindungsgemäßen Vorrichtung Temperaturschwankungen innerhalb der Kautschukmischung erheblich verringert und somit sicherstellt, dass die Silanisierungsreaktion überall gleichmäßig und möglichst vollständig abläuft.

Eine vor- oder nachstehend beschriebene erfindungsgemäße Vorrichtung und Verwendung sowie ein nachstehend beschriebenes erfindungsgemäßes Verfahren eignen sich auch zum Mischen von rußhaltigen Kautschukmischungen.

Im Rahmen der vorliegenden Erfindung umfasst der Ausdruck "Knetrotor" insbesondere Mischrotoren beispielsweise eines Innenmischers und Extruderschnecken eines Ein- oder Zwei schneckenextruders.

Bevorzugt ist eine erfindungsgemäße Vorrichtung wie vorstehend beschrieben oder wie vorstehend als bevorzugt beschrieben, wobei zwei Knetrotoren der mindestens zwei Knetrotoren koaxial angeordnet sind und/oder die Drehachsen der Knetrotoren im Wesentlichen senkrecht zur Drehachse der ersten Mischrotoren verlaufen.

Ein Vorteil des vorstehend beschriebenen Aspekts der vorliegenden Erfindung ist, dass eine homogenere Verteilung der Mischungsbestandteile und eine höhere Dispersion der Füllstoffe, insbesondere von Silica, in der entstehenden Kautschukmischung bewirkt.

Bevorzugt ist eine erfindungsgemäße Vorrichtung wie vorstehend beschrieben oder wie vorstehend als bevorzugt beschrieben, wobei die Kneteinheit mindestens eine Knetkammer aufweist und die Knetkammer sowie die Knetrotoren mittels Kühlungsmittel gekühlt werden können. Solche Kühlmittel kann beispielsweise eine Wasserkühlung mittels durchlaufenden Wassers durch Kühlkanälen in den Knetrotoren oder des Kammergehäuses bzw. des Zylinders sein.

Ein Vorteil des vorstehend beschriebenen Aspekts der vorliegenden Erfindung ist, dass die Kautschukvormischung in der Kneteinheit schneller gekühlt werden kann und somit die Auslastung einer vorstehend als bevorzugt beschriebenen erfindungsgemäßen Vorrichtung gegenüber einer erfindungsgemäßen Vorrichtung ohne diese Kühlmittel erhöht werden kann. Mittels der Kühlmittel kann zudem die Temperatur genauso eingestellt werden, dass das Ende der jeweiligen Silanisierungsreaktion und die optimale Temperatur zum Fertigmischen der Kautschukgrundmischung oder der Kautschukfertigmischung in der unteren Mischkammer zeitlich optimiert erreicht werden kann. Das Verschieben der Vollendung der Silanisierungsreaktion in eine Kneteinheit einer erfindungsgemäßen Vorrichtung ist eine besonders große Leistung der vorliegenden Erfindung. Dies wiederum führt zu verbesserten Eigenschaften in dem finalen Reifenbauteil aus der besagten Kautschukmischung wie beispielsweise Rückprallelastizität bei Raumtemperatur und 70°C gemäß DIN 53 512 oder des maximalen (max) Verlustfaktor tan $\delta$ (tangens delta) aus dynamisch-mechanischer Messung bei 55 °C gemäß DIN 53 513 und einem Dehnungsdurchlauf (engl. "strain sweep").

Bevorzugt ist eine erfindungsgemäße Vorrichtung wie vorstehend beschrieben oder wie vorstehend als bevorzugt beschrieben, wobei die untere Mischkammer und die zweiten Mischrotoren dazu eingerichtet sind, Schergeschwindigkeiten im Bereich von 1 bis 500 1/s, bevorzugt im Bereich von 5 bis 200 1/s, besonders bevorzugt von 10 bis 100 1/s in einer Kautschukmischung zu erzeugen.

Ein Vorteil des vorstehend beschriebenen Aspekts der vorliegenden Erfindung ist, dass dadurch, dass in der oberen Mischkammer konstant höhere Temperaturen erreicht werden dürfen, auch höhere Scherkräfte durch eine höhere Rotationsgeschwindigkeit der Mischrotoren in der oberen Mischkammer eingesetzt werden dürfen, was wiederum zu einer homogeneren Verteilung der Mischungsbestandteile und einer höheren Dispersion der Füllstoffe, insbesondere von Silica, in der entstehenden Kautschukmischung führt.

Die Schergeschwindigkeiten werden im Rahmen der vorliegenden Erfindung gemäß der folgenden Formel 1 berechnet:

$$\text{Schergeschwindigkeit} = v\,/\,h \qquad\qquad \text{(Formel 1),}$$

wobei

v = Kreisgeschwindigkeit des Rotors oder Schneckensegments [1/s] x maximaler Radius des Rotors bzw. Schneckensegments [mm]

und

h = Abstand zwischen der Innenwand des Kammergehäuses oder des Extruderzylinders und der Außenwand des Rotorkerns bzw. des Schneckenkerns.

Im Rahmen der vorliegenden Erfindung besteht ein Rotor aus einem Rotorkern und seinen Rotorflügeln. Im Rahmen der vorliegenden Erfindung besteht eine Extruderschnecke aus einem oder mehreren Schneckensegmenten, wobei jedes Schneckensegment einen Schneckenkern und optional einen oder mehreren Schneckenflügel aufweist.

Im Rahmen der vorliegenden Erfindung erstreckt sich der Radius des Rotors senkrecht von der Drehachse des Rotors bis zum äußersten Punkt des Rotorflügels. Der maximale Radius des Rotors ist der Abstand, bei dem die Distanz zwischen der besagten Drehachse und dem besagten äußersten Punkt des Rotorflügels am größten ist.

Im Rahmen der vorliegenden Erfindung erstreckt sich der Radius des Schneckensegments senkrecht von der Drehachse des Schneckensegments bis zum äußersten Punkt des Schneckenkerns oder, falls vorhanden, des Schneckenflügels. Der maximale Radius des Schneckensegments ist der Abstand, bei dem die Distanz zwischen der besagten Drehachse und dem besagten äußersten Punkt des Schneckensegments oder, falls vorhanden, des Schneckenflügels, am größten ist.

Bevorzugt ist eine erfindungsgemäße Vorrichtung wie vorstehend beschrieben oder wie vorstehend als bevorzugt beschrieben, wobei die Kneteinheit einen Innenmischer mit zwei Mischrotoren als Knetrotoren umfasst, wobei das Füllvolumen des Innenmischers bevorzugt zwischen dem Füllvolumen der oberen und der unteren Mischkammer liegt, besonders bevorzugt zumindest im Wesentlichen dem Füllvolumen der unteren Mischkammer entspricht. Besonders bevorzugt wird der Innenmischer mittels Wasserkühlung gekühlt wird, wobei jedoch auch andere Kühlmittel wie ein Gas wie Luft oder ein Öl eingesetzt werden können.

Ein Vorteil des vorstehend beschriebenen Aspekts der vorliegenden Erfindung ist, dass mittels des besagten Füllvolumens relativ hohe Rotationsgeschwindigkeiten der Knetrotoren der Kneteinheit bei einer gleichzeitig schnell genug erfolgenden Abkühlung der Kautschukmischung in der Kneteinheit erfolgen kann. Dies wiederum führt zu einer Beschleunigung des Prozesses der Kautschukmischungsherstellung. Dies gilt insbesondere in Verbindung mit den nachstehend beschriebenen Schergeschwindigkeiten für die Kneteinheit.

Im Rahmen der vorliegenden Erfindung ist das Füllvolumen einer Mischkammer oder des Innenmischers, d.h. das Füllvolumen der Mischkammer des Innenmischers, das Volumen der Mischkammer, das zum Mischen genutzt werden kann, welches dem Volumen der leeren und geschlossenen Mischkammer abzüglich des Volumens der darin befindlichen Rotoren entspricht. Bestimmt werden kann dieses Volumen beispielsweise mittels Füllen einer Mischkammer mit geschlossenem Sattel mit einem Öl und schließen des Stempels der Mischkammer. Das Volumen des Öls kann nach dem Herauslassen aus der Mischkammer mittels Wiegen und dessen Dichte bestimmt werden.

Bevorzugt ist eine erfindungsgemäße Vorrichtung wie vorstehend beschrieben oder wie vorstehend als bevorzugt beschrieben, wobei die Kneteinheit ein Extruder mit einer oder zwei Schneckenschrauben als Knetrotoren umfasst, wobei der Extruderzylinder des Ein- oder Zweischneckenextruders bevorzugt mittels Wasserkühlung gekühlt wird, wobei die Strömungsrichtung des Kühlwassers der Wasserkühlung gegenläufig der Extrusionsrichtung ist und/oder die Kneteinheit bevorzugt ein Zweischneckenextruder mit zwei Schneckenschrauben als Knetrotoren ist. Hierbei kann der Doppelschneckenextruder eine konische oder parallele Schneckenanordnung haben. Anstelle der Kühlung mit Wasser in der vorstehend beschriebenen Wasserkühlung können jedoch auch andere Kühlmittel so wie ein Gas wie Luft oder ein Öl eingesetzt werden.

Ein Vorteil des vorstehend beschriebenen Aspekts der vorliegenden Erfindung ist, dass durch den Einsatz eines Extruders, insbesondere durch den Einsatz eines Extruders mit Wasserkühlung im Extruderzylinder, eine Kautschukmischung vor dem Eintritt in die untere Mischkammer noch schneller gekühlt werden kann.

Bevorzugt ist eine erfindungsgemäße Vorrichtung wie vorstehend beschrieben oder wie vorstehend als bevorzugt beschrieben, wobei die Kneteinheit, welche bevorzugt ein Innenmischer ist, so zwischen der oberen Mischkammer und der unteren Mischkammer angeordnet ist, dass eine aus der oberen Mischkammer fallende Kautschukmischung aufgrund der Schwerkraft in die Kneteinheit fällt, und

- die oder eine Auswurföffnung der Kneteinheit so angeordnet ist, dass eine aus der Auswurföffnung der Kneteinheit kommende Kautschukmischung mittels der Schwerkraft oder eines Förderbandes in die untere Mischkammer fällt oder

- ein Einschneckenextruder nach der Kneteinheit so angeordnet ist, dass der Einschneckenextruder eine in der Kneteinheit gekneteten Kautschukmischung in die untere Mischkammer transferiert, bevorzugt mittels eines Förderbandes, welches einen weiteren Temperaturkontrollschritt der Kautschukmischung ermöglicht und somit die vorstehend beschriebenen Vorteile aufweist.

Ein Vorteil des vorstehend beschriebenen Aspekts der vorliegenden Erfindung ist, dass so das Kippen vermieden werden kann und der Extruder das Entleeren des Innenmischers übernimmt.

Bevorzugt ist eine erfindungsgemäße Vorrichtung wie vorstehend beschrieben oder wie vorstehend als bevorzugt beschrieben, wobei die Knetrotoren und die Kneteinheit dazu eingerichtet sind, Schergeschwindigkeiten im Bereich von 1 bis 100 1/s, bevorzugt im Bereich von 5 bis 50 1 /s, in einer Kautschukmischung zu erzeugen.

Ein Vorteil des vorstehend beschriebenen Aspekts der vorliegenden Erfindung ist, dass eine schnell genug erfolgenden Abkühlung der Kautschukmischung in der Kneteinheit bei gleichzeitig relativ hohen Rotationsgeschwindigkeiten der Knetrotoren der Kneteinheit erfolgen kann. Dies gilt insbesondere in Verbindung mit einem vorstehend beschriebenen Zweischnecken-Extruder und/oder des vorstehend beschriebenen Füllvolumens. Die höheren Schergeschwindigkeiten haben die vor- oder nachstehend angegebenen Vorteile

Bevorzugt ist zudem eine erfindungsgemäße Vorrichtung zur Durchführung eines Verfahrens wie nachstehend beschrieben oder wie nachstehend als bevorzugt beschrieben, wobei die Vorrichtung bevorzugt so definiert ist wie vorstehend beschrieben oder wie vorstehend als bevorzugt beschrieben.

Die vorstehend beschriebenen vorteilhaften Aspekte einer erfindungsgemäßen Vorrichtung zum Herstellen von silikahaltigen Kautschukmischungen gelten auch für sämtliche Aspekte eines nachstehend beschriebenen Verfahrens und die nachstehend diskutierten vorteilhaften Aspekte erfindungsgemäßer Verfahren gelten entsprechend für sämtliche Aspekte einer erfindungsgemäßen Vorrichtung zum Herstellen von silikahaltigen Kautschukmi schungen.

Die Erfindung betrifft auch ein Verfahren zur Herstellung einer Kautschukmischung, umfassend die folgenden Schritte:

A)Herstellen einer Kautschukvormischung in einer ersten Mischkammer oder Bereitstellen einer Kautschukvormischung,

B) Transferieren der in Schritt A) hergestellten oder bereitgestellten Kautschukvormischung mit einer Temperatur von mindestens 150 °C in eine Kneteinheit zum Kneten einer in Schritt A) hergestellten oder bereitgestellten Kautschukmischung, wobei die Kneteinheit mindestens zwei Knetrotoren aufweist;

C) Mischen der Kautschukmischung in der Kneteinheit mittels der Knetrotoren, sodass eine Kautschukmischung mit einer Temperatur von maximal 145 °C entsteht,

D) Transferieren der in Schritt C) gemischten Kautschukmischung mit einer Temperatur von maximal 145 °C in eine zweite Mischkammer

und

E) Mischen der in die zweite Mischkammer transferierte Kautschukmischung mit weiteren Kautschukmischungsbestandteilen zu einer Kautschukgrund- oder Kautschukfertigmischung, bevorzugt bei einer Temperatur im Bereich von 80 bis 120 °C.

Im Rahmen der vorliegenden Erfindung umfasst der Ausdruck "Kautschukmischung" insbesondere Kautschukvormischungen, Kautschukgrund- oder Kautschukfertigmischungen.

Bevorzugt enthält eine silikahaltige Kautschukmischung im Rahmen der vorliegenden Erfindung 0,1 bis 200 phr wenigstens einer Kieselsäure, bevorzugt 5 bis 100 phr mindestens einer Kieselsäure. Es kann sich somit auch um eine sogenannte Teil-Silika-Mischung handeln.

Die Begriffe "Kieselsäure", Silica" und "Silika" werden im Rahmen der vorliegenden Erfindung synonym verwendet.

Bei den Kieselsäuren kann es sich um im Stand der Technik bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 $m^2$/g, bevorzugt von 35 bis 260 $m^2$/g, besonders bevorzugt von 70 bis 235 $m^2$/g und ganz besonders bevorzugt von 70 bis 205 $m^2$/g, und eine CTAB-Oberfläche (gemäß ASTM D 3765) von 30 bis 400 $m^2$/g, bevorzugt von 30 bis 255 $m^2$/g, besonders bevorzugt von 65 bis 230 $m^2$/g und ganz besonders bevorzugt von 65 bis 200 $m^2$/g, aufweist.

Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch Kieselsäuren mit einer vergleichsweise niedrigen BET-Oberfläche (wie z. B. Zeosil® 1115 oder Zeosil® 1085 der Firma Solvay) als auch hoch dispergierbare Kieselsäuren, so genannte HD-Kieselsäuren (z. B. Zeosil® 1165 MP der Firma Solvay).

Die enthaltene Kieselsäure kann in Form von angebundene oder nicht angebundene Kieselsäure enthalten sein. Für den Fall, dass die Kieselsäure in Form angebundener Kieselsäure vorliegt, enthält die Kautschukmischung bevorzugt wenigstens ein Silan-Kupplungsagens.

Silan-Kupplungsagenzien werden im Rahmen der vorliegenden Erfindung auch als "Silan" bezeichnet.

Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei sämtliche im Stand der Technik für die Verwendung in Kautschukmischungen bekannten Silan-Kupplungsagenzien verwendet werden.

Zur Verbesserung der Verarbeitbarkeit und zur Anbindung neuer Kieselsäure, Ruß und/oder anderer vorhandener polarer Füllstoffe an den Dienkautschuken eignen sich die oben genannten Mercaptosilane als Kupplungsagenzien. Die Kupplungsagenzien reagieren mit den oberflächlichen Silanolgruppen der Kieselsäure oder einer polaren Gruppen während des Mischens des Kautschuk bzw. der Kautschukmischung (in situ) oder bereits vor der Zugabe des Füllstoffes zum Kautschuk im Sinne einer Vorbehandlung (Vormodifizierung). Die erfindungsgemäße Kautschukmischung kann neben dem Mercaptosilanen auch weitere Silan-Kupplungsagenzien aufweisen, wie sie dem Fachmann wohl bekannt sind. Solche aus dem Stand der Technik bekannten Kupplungsagenzien sind bifunktionelle Organosilane, die am Siliziumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann.

Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:

-SCN, -SH, -NH$_2$ oder -S$_x$- (mit x = 2 bis 8).

Eine erfindungsgemäße Kautschukmischung enthält bevorzugt mindestens ein Silan-Kupplungsagenzien ausgewählt aus der Gruppe bestehend aus:

3-Mercaptopropyltriethoxy silan,
3-Thiocyanato-propyltrimethoxysilan
und
3,3'-Bis(triethoxysilylpropyl)polysulfide mit 2 bis 8 Schwefelatomen, besonders bevorzugt 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden. TESPT kann dabei beispielsweise auch als Gemisch mit Industrieruß (Handelsname X50S® der Firma Evonik) zugesetzt werden.

Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363® von der Firma Evonik Industries vertrieben werden.

Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.

Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.

Bevorzugt ist ein erfindungsgemäßes Verfahren wie vorstehend beschrieben oder wie vorstehend als bevorzugt beschrieben, wobei die erste und zweite Mischkammer eine obere und untere Mischkammer wie vorstehend beschrieben oder wie vorstehend als bevorzugt beschrieben und die Kneteinheit eine Kneteinheit einer Vorrichtung wie vorstehend beschrieben oder wie vorstehend als bevorzugt beschrieben sind.

Bevorzugt ist ein erfindungsgemäßes Verfahren wie vorstehend beschrieben oder wie vorstehend als bevorzugt beschrieben, wobei in Schritt E) eine Kautschukfertigmischung entsteht, welche anschließend zu einem Reifenbauteil in einem Reifenrohling verarbeitet wird und der so entstehende Reifenrohling zu einem vulkanisierten Fahrzeugluftreifen weiterverarbeitet wird, wobei das Reifenbauteil bevorzugt eine Laufstreifenkomponente oder eine Seitenwandkomponente, besonders bevorzugt eine Laufstreifenkomponente ist.

Ein Vorteil des vorstehend beschriebenen Aspekts der vorliegenden Erfindung ist, dass so aus der besagten Kautschukmischung hergestellte Reifenbauteile bessere Eigenschaften aufweisen, wie beispielsweise Rückprallelastizität bei Raumtemperatur und 70°C gemäß DIN 53 512 oder des maximalen (max) Verlustfaktor tan $\delta$ (tangens delta) aus dynamisch-mechanischer Messung bei 55 °C gemäß DIN 53 513 und einem Dehnungsdurchlauf (engl. "strain sweep").

Bevorzugt ist ein erfindungsgemäßes Verfahren wie vorstehend beschrieben oder wie vorstehend als bevorzugt beschrieben, wobei während des Schrittes A) die Kautschukmischung in der ersten Mischkammer

- eine Temperatur im Bereich von 130 bis 220 °C aufweist, bevorzugt im Bereich von 140-190 °C, besonders bevorzugt im Bereich von 150-180 °C,
- und/oder
- Schergeschwindigkeiten im Bereich von 200 bis 2000, bevorzugt 500 bis 1500 1/s, besonders bevorzugt im Bereich von 400 bis 1000 1/s, ausgesetzt wird.

Ein Vorteil des vorstehend beschriebenen Aspekts der vorliegenden Erfindung ist, dass eine homogenere Verteilung der Mischungsbestandteile und eine höhere Dispersion der Füllstoffe, insbesondere von Silica, in der entstehenden Kautschukmischung erreicht werden.

Die vorstehend beschriebenen vorteilhaften Aspekte einer erfindungsgemäßen Vorrichtung zum Herstellen von silikahaltigen Kautschukmischungen und eines erfindungsgemäßen Verfahrens zur Herstellung einer Kautschukmischung gelten auch für sämtliche Aspekte einer nachstehend beschriebenen Verwendung und die nachstehend diskutierten vorteilhaften Aspekte erfindungsgemäßer Verwendungen gelten entsprechend für sämtliche Aspekte einer erfindungsgemäßen Vorrichtung zum Herstellen von silikahaltigen Kautschukmischungen und eines erfindungsgemäßen Verfahrens zur Herstellung einer Kautschukmi schung.

Die Erfindung betrifft auch eine Verwendung einer Kneteinheit wie vorstehend beschrieben oder wie vorstehend als bevorzugt beschrieben zum Kneten einer Kautschukmischung, wobei die Kneteinheit räumlich nach oder unterhalb einer ersten Mischkammer zur Verwendung in einer Vorrichtung wie vorstehend beschrieben oder wie vorstehend als bevorzugt beschrieben angeordnet ist, wobei die Kneteinheit bevorzugt räumlich vor oder oberhalb einer zweiten Mischkammer einer Vorrichtung wie vorstehend beschrieben oder wie vorstehend als bevorzugt beschrieben angeordnet ist.

Die Erfindung betrifft auch eine Verwendung einer Vorrichtung wie vorstehend beschrieben oder wie vorstehend als bevorzugt beschrieben zur Herstellung einer Kautschukmischung umfassend ein oder mehrere Silane und Silica, wobei Silica bevorzugt in einem Anteil von 30 - 250 phr, besonders bevorzugt 80 - 210 phr, und die Silane bevorzugt in einer Gesamtkonzentration von 0,5-30 phr vorliegen, besonders bevorzugt 5 bis 25 phr.

Die Erfindung betrifft auch eine Verwendung einer Vorrichtung wie vorstehend beschrieben oder wie vorstehend als bevorzugt beschrieben zum Mischen einer Kautschukmischung mit Schergeschwindigkeiten im Bereich von 20 bis 400 1/s, bevorzugt im Bereich von 100 bis 300 1/s, in der oberen Mischkammer, wobei die Kautschukmischung bevorzugt Silica umfasst, wobei Silica besonders bevorzugt in einem Anteil von 80 bis 210 phr.

Figurenbeschreibung:

Es zeigt:

Figur 1:     Einen Querschnitt durch eine erfindungsgemäße Vorrichtung mit einem Innenmischer und einem Einschneckenextruder als Kneteinheit;

Figur 2:     Einen Querschnitt durch eine weitere erfindungsgemäße Vorrichtung mit einem Zweischneckenextruder als Kneteinheit.

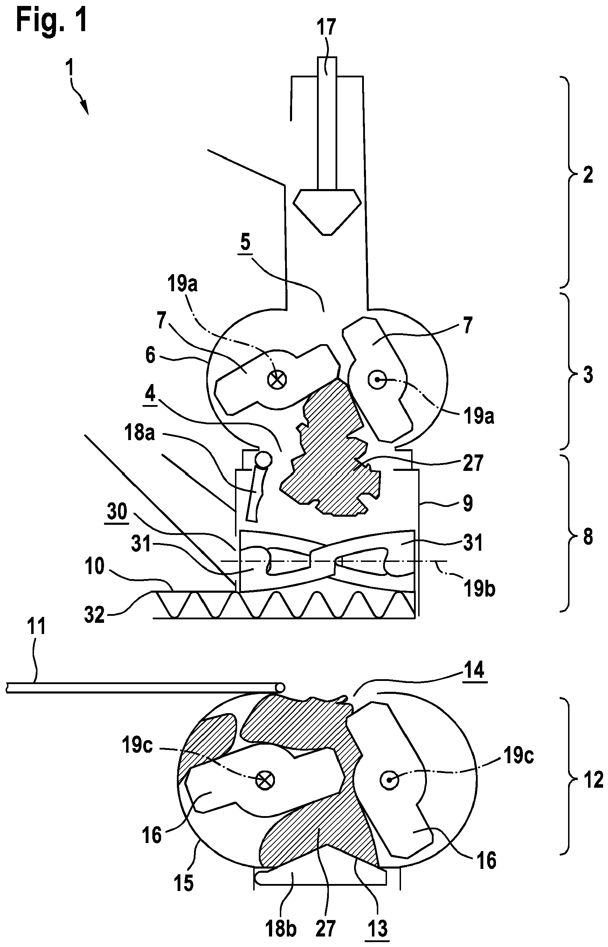

Figur 1 zeigt eine schematische Darstellung einer erfindungsgemäßen Vorrichtung 1 zum Herstellen von silikahaltigen Kautschukmischungen 27, umfassend

- eine obere erste Mischrotoren 7 umfassende Mischkammer 3, welche von einem Oberkammergehäuse 6, einer ersten Einfüllöffnung 5 und einer ersten Auswurföffnung 4 begrenzt wird, wobei die obere Mischkammer 3 einen Sattel 18a aufweist,
- eine untere zweite Mischrotoren 16 umfassende Mischkammer 12, welche von einem Unterkammergehäuse 15, einer zweiten Einfüllöffnung 14 und einer zweiten Auswurföffnung 13 begrenzt wird, wobei die untere Mischkammer 12 mit einem Förderband 11 befüllt werden kann und einen Sattel 18b aufweist und die zweiten Mischrotoren 16 sich je eine Drehachse 19c drehen,

dadurch gekennzeichnet, dass die Vorrichtung 1 räumlich zwischen der oberen Mischkammer 3 und der unteren Mischkammer 12 eine Kneteinheit 8 zum Kneten einer in der oberen Mischkammer 3 angemischten Kautschukmischung 27 aufweist und die Kneteinheit 8 drei Knetrotoren 31, 32 aufweist, wobei

- die Vorrichtung 1 einen ersten Schacht 2 mit einem Stempel 17 umfasst,
- die Kneteinheit 8 einen Innenmischer 9 mit zwei Mischrotoren 31 umfasst,
- die Kneteinheit 8 einen Extruder 10 mit einer Schneckenschrauben als Knetrotor 32 umfasst,
- die Kneteinheit 8 mindestens eine Knetkammer aufweist und die Knetkammer sowie die Knetrotoren 31, 32 mittels Kühlungsmittel gekühlt werden können
- die Knetrotoren 31 des einen Innenmischers 9 der Kneteinheit 8 koaxial angeordnet sind und
- die Drehachsen 19b der Knetrotoren 31 senkrecht zur Drehachse 19a der ersten Mischrotoren 7 verlaufen.

In Figur 1 ist zu sehen, dass die Kautschukmischung 27 aus der oberen Mischkammer 3 in den Innenmischer 9 fällt, wo die Kautschukmischung 27 von den Knetrotoren 31 gemischt werden kann, um die Kautschukmischung 27 anschließend im Einschneckenextruder 10 von Innenmischer 9 nach außen auf das Förderband 11 zu befördern. Die Förderrichtung des Förderbands 11 ist von außen in Richtung der zweite Einfüllöffnung 14 der unteren Mischkammer 12 und die Förderrichtung des Einschneckenextruders 10 ist der Förderrichtung des Förderbands 11 diametral entgegengesetzt.

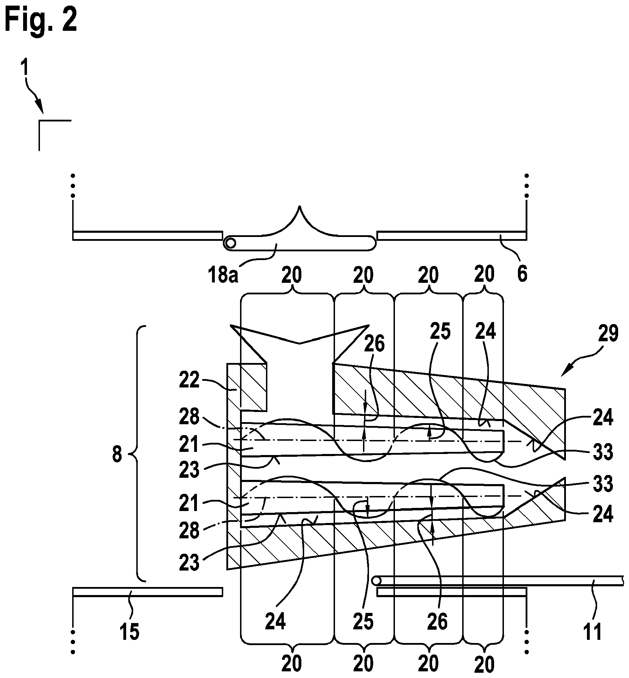

Figur 2 zeigt eine schematische Darstellung einer erfindungsgemäßen Vorrichtung 1 zum Herstellen von silikahaltigen Kautschukmischungen 27 in einer weiteren Ausführungsform, wobei die Kneteinheit 8 einen Zweischneckenxtruder 29 mit einem eine Innenwand 24 umfassenden Extruderzylinder 22 und das Förderband 11 umfasst. Zu sehen sind in Figur 2 auch das Oberkammergehäuse 6 der oberen Mischkammer mit dem Sattel 18a und das Unterkammergehäuse 15 der unteren Mischkammer. Der Zweischneckenextruder 29 weist zwei Schnecken mit je vier Schneckensegmenten 20 und je einem Schneckenkern 21 mit einer Außenwand 23 auf. Jede Schnecke des Zweischneckenxtruder 29 kann um eine Drehachse 28 gedreht werden und weist für jedes Schneckensegment 20 einen maximalen Radius 25 sowie einen Schneckenflügel 33 auf. Zu sehen ist in Figur 2 auch der Abstand 26 zwischen der Innenwand 24 des Extruderzylinders 22 und der Außenwand 23 des Schneckenkerns 21. Die zwei Schnecken des Zweischneckenxtruders 29 sind in Figur 2 nur aufgrund der besseren Darstellung übereinandern dargestellt. In der Realität befinden sich die beiden Schnecken eines Zweischneckenxtruders 29 einer erfindungsgemäßen Vorrichtung 1 in einer Ebene horizontal nebeneinander. Die Schneckenflügel 33 umlaufen den Schneckenkern 21 der jeweiligen Schnecke des Extruders 29 helixartig, was in Figur 2 dadurch angedeutet ist, dass einzelne Teile der Schneckenflügel 33 mit gestrichelten Linien und die anderen Teile mit durchgezogenen Linien dargestellt sind. Der gestrichelte Teil der liegt dabei vom Auge des Betrachters räumlich hinter dem Schneckenkern 21.

**Bezugszeichenliste:**

| | |
|---|---|
| 1 | erfindungsgemäße Vorrichtung; Mischvorrichtung; |
| 2 | erster Schacht; Befüllschacht zum Befüllen der oberen Mischkammer |
| 3 | obere Mischkammer; erste Mischkammer |
| 4 | erste Auswurföffnung |
| 5 | erste Einfüllöffnung |
| 6 | Oberkammergehäuse der oberen Mischkammer |
| 7 | erster Mischrotor |
| 8 | Kneteinheit zum Kneten einer in der oberen Mischkammer angemischten Kautschukmi schung |
| 9 | Innenmischer mit zwei Mischrotoren |
| 10 | Extruder mit einer Schneckenschrauben; Einschneckenextruders |
| 11 | Förderband zum Befüllen der unteren Mischkammer |
| 12 | untere Mischkammer; zweite Mischkammer |
| 13 | zweite Auswurföffnung |
| 14 | zweite Einfüllöffnung |
| 15 | Unterkammergehäuse der unteren Mischkammer |

16 zweiter Mischrotor
17 Stempel der oberen Mischkammer
18a Sattel der oberen Mischkammer
18b Sattel der unteren Mischkammer
19a Rotationsachse eines ersten Mischrotors
19b Rotationsachse eines Knetrotors der Kneteinheit
19c Rotationsachse eines zweiten Mischrotors
20 Schneckensegment
21 Schneckenkern eines Schneckensegments
22 Extruderzylinder
23 Außenwand des Schneckenkerns
24 Innenwand des Extruderzylinders
25 maximaler Radius des Schneckensegments
26 Abstand zwischen der Innenwand des Extruderzylinders und der Außenwand des Schneckenkerns
27 Kautschukmischung
28 Rotationsachse einer Schnecke
29 Zweischneckenxtruder
30 Einfüllöffnung der Kneteinheit; Einfüllöffnung zum Befüllen der Kneteinheit
31 Knetrotor des Innenmischers der Kneteinheit mit Rotorflügel (Rotorkern ist nicht gezeigt); Mischrotoren des Innenmischers der Kneteinheit mit Rotorflügel (Rotorkern ist nicht gezeigt)
32 Knetrotor des Einschneckenextruders der Kneteinheit
33 Schneckenflügel eines Schneckensegments

**Patentansprüche**

1. Vorrichtung zum Herstellen von silikahaltigen Kautschukmischungen (27), umfassend

   - eine obere erste Mischrotoren (7) umfassende Mischkammer (3), welche von einem Oberkammergehäuse (6), einer ersten Einfüllöffnung (5) und einer ersten Auswurföffnung (4) begrenzt wird,
   - eine untere zweite Mischrotoren (16) umfassende Mischkammer (12), welche von einem Unterkammergehäuse (15), einer zweiten Einfüllöffnung (14) und einer zweiten Auswurföffnung (13) begrenzt wird,

   **dadurch gekennzeichnet, dass** die Vorrichtung (1) räumlich zwischen der oberen Mischkammer (3) und der unteren Mischkammer (12) eine Kneteinheit (8) zum Kneten einer in der oberen Mischkammer (3) angemischten Kautschukmischung (27) aufweist und die Kneteinheit (8) mindestens zwei Knetrotoren (31, 32) aufweist.

2. Vorrichtung nach Anspruch 1, wobei zwei Knetrotoren (31) der mindestens zwei Knetrotoren (31, 32) koaxial angeordnet sind und/oder die Drehachsen (19b) der Knetrotoren (31, 32) im Wesentlichen senkrecht zur Drehachse (19a) der ersten Mischrotoren (7) verlaufen.

3. Vorrichtung nach einem der vorangehenden Ansprüche, wobei die Kneteinheit (8) mindestens eine Knetkammer aufweist und die Knetkammer sowie die Knetrotoren (31, 32) mittels Kühlungsmittel gekühlt werden können.

4. Vorrichtung nach einem der vorangehenden Ansprüche, wobei die untere Mischkammer (12) und die zweiten Mischrotoren (16) dazu eingerichtet sind, Schergeschwindigkeiten im Bereich von 1 bis 500 1/s, bevorzugt im Bereich von 5 bis 200 1/s, besonders bevorzugt 10 - 100 1/s in einer Kautschukmischung (27) zu erzeugen.

5. Vorrichtung nach einem der vorangehenden Ansprüche, wobei die Kneteinheit (8) einen Innenmischer (9) mit zwei Mischrotoren (31) als Knetrotoren umfasst, wobei das Füllvolumen des Innenmischers (9) bevorzugt zwischen dem Füllvolumen der oberen und der unteren Mischkammer (3, 12) liegt, besonders bevorzugt zumindest im Wesentlichen dem Füllvolumen der unteren Mischkammer (12) entspricht.

6. Vorrichtung nach einem der vorangehenden Ansprüche, wobei die Kneteinheit (8) ein Extruder (10, 29) mit einer oder zwei Schneckenschrauben als Knetrotoren umfasst, wobei der Extruderzylinder (22) des Ein- oder Zweischneckenextruders (10, 29) bevorzugt mittels Wasserkühlung gekühlt wird, wobei die Strömungsrichtung des Kühlwassers der Wasserkühlung gegenläufig der Extrusionsrichtung ist und/oder die Kneteinheit (8) bevorzugt ein Zweischneckenextruder (29) mit zwei Schneckenschrauben als Knetrotoren ist.

7. Vorrichtung nach einem der vorangehenden Ansprüche, wobei die Kneteinheit (8), welche bevorzugt ein Innenmischer (9) ist, so zwischen der oberen Mischkammer und der unteren Mischkammer (3, 12) angeordnet ist, dass eine aus der oberen Mischkammer (3) fallende Kautschukmischung (27) aufgrund der Schwerkraft in die Kneteinheit (8) fällt, und

   - die oder eine Auswurföffnung der Kneteinheit (8) so angeordnet ist, dass eine aus der Auswurföffnung der Kneteinheit (8) kommende Kautschukmischung (27) mittels der Schwerkraft oder eines Förderbandes (11) in die untere Mischkammer (12) fällt oder
   - ein Einschneckenextruder (10) nach der Kneteinheit (8) so angeordnet ist, dass der Einschneckenextruder (10) eine in der Kneteinheit (8) gekneteten Kautschukmischung (27) in die untere Mischkammer (12) transferiert.

8. Vorrichtung nach einem der vorangehenden Ansprüche, wobei die Knetrotoren (31, 32) und die Kneteinheit (8) dazu eingerichtet sind, Schergeschwindigkeiten im Bereich von 1 bis 100 1/s, bevorzugt im Bereich von 5 bis 50 1 /s, in einer Kautschukmischung (27) zu erzeugen.

9. Verfahren zur Herstellung einer Kautschukmischung (27), umfassend die folgenden Schritte:

   A) Herstellen einer Kautschukvormischung (27) in einer ersten Mischkammer (3) oder Bereitstellen einer Kautschukvormischung (27),
   B) Transferieren der in Schritt A) hergestellten oder bereitgestellten Kautschukvormischung (27) mit einer Temperatur von mindestens 150 °C in eine Kneteinheit (8) zum Kneten einer in Schritt A) hergestellten oder bereitgestellten Kautschukmischung (27), wobei die Kneteinheit (8) mindestens zwei Knetrotoren (31, 32) aufweist;
   C) Mischen der Kautschukmischung (27) in der Kneteinheit (8) mittels der Knetrotoren(31, 32), sodass eine Kautschukmischung (27) mit einer Temperatur von maximal 145 °C entsteht,
   D) Transferieren der in Schritt C) gemischten Kautschukmischung (27) mit einer Temperatur von maximal 145 °C in eine zweite Mischkammer (12) und
   E) Mischen der in die zweite Mischkammer (12) transferierte Kautschukmischung (27) mit weiteren Kautschukmischungsbestandteilen zu einer Kautschukgrund- oder Kautschukfertigmischung (27), bevorzugt bei einer Temperatur im Bereich von 80 bis 120 °C,

   wobei bevorzugt

   - die erste und zweite Mischkammer (3, 12) eine obere und untere Mischkammer nach einem der Ansprüche 1 bis 9 und
   - die Kneteinheit (8) eine Kneteinheit einer Vorrichtung nach einem der Ansprüche 1 bis 8 sind.

10. Verfahren nach Anspruch 9, wobei in Schritt E) eine Kautschukfertigmischung (27) entsteht, welche anschließend zu einem Reifenbauteil in einem Reifenrohling verarbeitet wird und der so entstehende Reifenrohling zu einem vulkanisierten Fahrzeugluftreifen weiterverarbeitet wird, wobei das Reifenbauteil bevorzugt eine Laufstreifenkomponente oder eine Seitenwandkomponente, besonders bevorzugt eine Laufstreifenkomponente ist.

11. Verfahren nach einem der vorangehenden Ansprüche 9 bis 10, wobei während des Schrittes A) die Kautschukmischung (27) in der ersten Mischkammer (3)

   - eine Temperatur im Bereich von 130 bis 220 °C aufweist, bevorzugt im Bereich von 140-190 °C, besonders bevorzugt im Bereich von 150-180 °C,
   und/oder
   - Schergeschwindigkeiten im Bereich von 200 bis 2000, bevorzugt 500 bis 1500 1/s, besonders bevorzugt im Bereich von 400 bis 1000 1/s, ausgesetzt wird.

12. Vorrichtung zur Durchführung eines Verfahrens nach einem der Ansprüche 9 bis 11, wobei die Vorrichtung bevorzugt so definiert ist wie in einem der Ansprüche 1 bis 8.

13. Verwendung einer Vorrichtung nach einem der vorangehenden Ansprüche 1 bis 8 zur Herstellung einer Kautschukmischung (27) umfassend ein oder mehrere Silane und Silica, wobei Silica bevorzugt in einem Anteil von 30 - 250 phr, besonders bevorzugt 80 - 210 phr, und die Silane bevorzugt in einer Gesamtkonzentration von 0,5-30 phr vorliegen, besonders bevorzugt 5 bis 25 phr.

**14.** Verwendung einer Vorrichtung nach einem der vorangehenden Ansprüche 1 bis 8 zum Mischen einer Kautschukmischung (27) mit Scherkräften im Bereich von 20 bis 400 1/s, bevorzugt im Bereich von 100 bis 300 1/s, in der oberen Mischkammer (3), wobei die Kautschukmischung (27) bevorzugt Silica umfasst, wobei Silica besonders bevorzugt in einem Anteil von 80 bis 210 phr.

**15.** Verwendung einer Kneteinheit wie in einem der vorangehenden Ansprüche 1 bis 8 definiert zum Kneten einer Kautschukmischung (27), wobei die Kneteinheit (8) räumlich nach oder unterhalb einer ersten Mischkammer (3) zur Verwendung in einer Vorrichtung nach einem der vorangehenden Ansprüche 1 bis 9 angeordnet ist, wobei die Kneteinheit (8) bevorzugt räumlich vor oder oberhalb einer zweiten Mischkammer (12) einer Vorrichtung nach einem der vorangehenden Ansprüche angeordnet ist.

# Fig. 1

## Fig. 2

Europäisches
Patentamt

European
Patent Office

Office européen
des brevets

**EUROPÄISCHER RECHERCHENBERICHT**

Nummer der Anmeldung

EP 20 21 0536

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2013 022786 A (TOYO TIRE & RUBBER CO [JP]) 4. Februar 2013 (2013-02-04) * Absätze [0002] - [0007], [0012] - [0040] * * Ansprüche 1-4; Abbildungen 1-3 * | 1-15 | INV. B29B7/18 B29B7/24 B29B7/74 |
| X | DE 37 20 325 A1 (WERNER & PFLEIDERER [DE]) 12. Januar 1989 (1989-01-12) | 1-8,12, 15 | ADD. B29B7/42 B29B7/46 B29B7/82 |
| A | * Spalte 4, Zeile 31 - Spalte 8, Zeile 41 * * Ansprüche 1-10; Abbildungen 1-3 * * Zusammenfassung * | 9-11,13, 14 | |
| A | DE 10 2017 207183 A1 (CONTINENTAL REIFEN DEUTSCHLAND GMBH [DE]) 31. Oktober 2018 (2018-10-31) * Ansprüche 1-10; Abbildungen 1,2 * * Zusammenfassung * | 1-15 | |
| A | JP 2010 089423 A (SUMITOMO RUBBER IND [JP]) 22. April 2010 (2010-04-22) * Abbildungen 1,2,8 * * Zusammenfassung * | 1-15 | RECHERCHIERTE SACHGEBIETE (IPC) |
| A | JP 2018 065278 A (SUMITOMO RUBBER IND [JP]) 26. April 2018 (2018-04-26) * Abbildungen 1-3 * | 1-15 | B29B B29C |
| A | DE 10 2015 201156 A1 (CONTINENTAL REIFEN DEUTSCHLAND GMBH [DE]) 28. Juli 2016 (2016-07-28) * Ansprüche 1-11; Abbildung 1 * * Zusammenfassung * | 1-15 | |
| A | US 6 258 302 B1 (NESBITT R D [US]) 10. Juli 2001 (2001-07-10) * Zusammenfassung; Abbildungen 4,5 * * Spalte 4, Zeile 56 - Spalte 5, Zeile 53 * | 1-15 | |

Der vorliegende Recherchenbericht wurde für alle Patentansprüche erstellt

| Recherchenort | Abschlußdatum der Recherche | Prüfer |
|---|---|---|
| München | 6. Mai 2021 | Brunold, Axel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 0536

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2021

| Im Recherchenbericht angeführtes Patentdokument | Datum der Veröffentlichung | Mitglied(er) der Patentfamilie | Datum der Veröffentlichung |
|---|---|---|---|
| JP 2013022786 A | 04-02-2013 | JP 5820174 B2<br>JP 2013022786 A | 24-11-2015<br>04-02-2013 |
| DE 3720325 A1 | 12-01-1989 | DE 3720325 A1<br>GB 2206076 A<br>US 4938605 A | 12-01-1989<br>29-12-1988<br>03-07-1990 |
| DE 102017207183 A1 | 31-10-2018 | KEINE | |
| JP 2010089423 A | 22-04-2010 | JP 5204610 B2<br>JP 2010089423 A | 05-06-2013<br>22-04-2010 |
| JP 2018065278 A | 26-04-2018 | KEINE | |
| DE 102015201156 A1 | 28-07-2016 | KEINE | |
| US 6258302 B1 | 10-07-2001 | AU 3488000 A<br>CA 2362178 A1<br>GB 2363355 A<br>JP 2002540821 A<br>US 6258302 B1<br>US 2001026027 A1<br>WO 0047392 A1 | 29-08-2000<br>17-08-2000<br>19-12-2001<br>03-12-2002<br>10-07-2001<br>04-10-2001<br>17-08-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2736690 B1
- EP 0618055 B1
- DE 4309451 A1
- DE 102006004062 A1
- WO 9909036 A
- WO 2008083241 A1
- WO 2008083242 A1
- WO 2008083243 A1
- WO 2008083244 A1